Europäisches Patentamt

European Patent Office

Office européen des brevets

(19)

(11) Veröffentlichungsnummer: **0 564 451 B1**

# (12) EUROPÄISCHE PATENTSCHRIFT

(45) Veröffentlichungstag der Patentschrift: **07.09.94**

(51) Int. Cl.5: **C01B 25/455**

(21) Anmeldenummer: **91902196.4**

(22) Anmeldetag: **24.12.90**

(86) Internationale Anmeldenummer:
**PCT/EP90/02304**

(87) Internationale Veröffentlichungsnummer:
**WO 92/11201 (09.07.92 92/17)**

(54) **VERFAHREN ZUR HERSTELLUNG VON ALKALIMONOFLUORPHOSPHAT.**

(43) Veröffentlichungstag der Anmeldung:
**13.10.93 Patentblatt 93/41**

(45) Bekanntmachung des Hinweises auf die
Patenterteilung:
**07.09.94 Patentblatt 94/36**

(84) Benannte Vertragsstaaten:
**AT BE CH DE DK ES FR GB GR IT LI LU NL SE**

(56) Entgegenhaltungen:
**DE-B- 1 224 280**
**US-A- 3 401 013**

**CHEMICAL ABSTRACTS, Band 85, Nr. 8, 23.**
**August 1976, Seite 132, Zusammenfassung**
**Nr. 48908j (Columbus, Ohio, US), & SU-A-512**
**171 (BELORUSSIAN TECHNOLOGICAL INSTI-**
**TUTE) 30. April 1976**

(73) Patentinhaber: **Kali-Chemie Aktiengesell-**
**schaft**
**Hans-Böckler-Allee 20**
**D-30173 Hannover (DE)**

(72) Erfinder: **SWIDERSKY, Hans-Walter**
**Zeppelinstrasse 5**
**D-3000 Hannover 1 (DE)**
Erfinder: **RUDOLPH, Werner**
**Oderstrasse 38**
**D-3000 Hannover 71 (DE)**
Erfinder: **HARTMAN, Ulrich**
**Obere Bachstrasse 5**
**D-3430 Witzenhausen 12 (DE)**
Erfinder: **MOEWIUS, Frank**
**Koepenicker Str. 17**
**D-1185 Berlin (DE)**
Erfinder: **RADONZ, Veronika**
**Strasse der DSF 3a**
**D-1636 Blankenfelde (DE)**
Erfinder: **MEISEL, Manfred**
**Strasse 53,Nr. 5A**
**D-1113 Berlin (DE)**

EP 0 564 451 B1

CHEMICAL ABSTRACTS, Band 95, Nr. 4, 1981, Seite 115, Zusammenfassung Nr. 27193p, (Columbus, Ohio, US), S.P. S.P. MARTYN-CHIK et al.: "New method for the preparation of sodium monofluorophosphate", & IZV. AKAD. NAUK SSSR, NEORG. MATER. 1981, 17(4), 703-6

(74) Vertreter: **Lauer, Dieter, Dr.**
**c/o Kali-Chemie Aktiengesellschaft**
**Hans-Böckler-Allee 20**
**D-30173 Hannover (DE)**

**Beschreibung**

Die Erfindung bezieht sich auf ein Verfahren zur Herstellung von Alkalimonofluorphosphat der Formel $M_2PO_3F$. Alkalimonofluorphosphate, beispielsweise Kaliumfluorphosphat, werden als Fluorträger in Zahnpasten oder Trinkwasser verwendet. Die Alkalimonofluorphosphate weisen zudem fungizide und insektizide Wirkung auf und werden daher auch in Holzschutzmitteln eingesetzt. Weiterhin sind Alkalimonofluorphosphate wertvolle Zwischenprodukte für die Herstellung anderer Monofluorphosphat-Verbindungen, die ihrerseits in Holzschutzmitteln verwendet werden, beispielsweise Kupfer und Zink enthaltende Monofluorphosphat-Verbindungen.

Zur Herstellung von Alkalimonofluorphosphaten kann man bekanntermaßen wasserfreie Phosphate mit Fluoriden bei sehr hoher Temperatur, meist oberhalb von 600 °C, umsetzen. Die dabei auftretende korrosive Schmelze macht einen entsprechenden apparativen Aufwand für die Reaktoren erforderlich.

Die deutsche Auslegeschrift DE- B 1 224 280 betrifft die Herstellung verschiedener Metallfluorphosphate. Ausgehend von wasserhaltigen oder wasserfreien Gemischen, welche Metallkationen, Phosphor und Fluor in wechselnden Verhältnissen enthalten, werden durch Umsetzung bei Temperaturen bis zu 800 °C Reaktionsprodukte, welche die obenangegebenen Elemente enthalten, hergestellt. Über die Art der in den Reaktionsprodukten enthaltenen chemischen Verbindungen kann der DE-B 1 224 280 nichts entnommen werden. Eine gezielte Lehre zur Synthese bestimmter Metallfluorphosphate findet sich nicht, lediglich ein Hinweis, daß je nach Art und Menge der Ausgangsmaterialien der Reaktionsbedingungen wie Temperatur und Zeit, die verschiedensten Produkte erhalten werden.

Aufgabe der vorliegenden Erfindung ist es, ein technisch einfaches Verfahren zur Herstellung von definierten Metallfluorphosphaten, nämlich Alkalimonofluorphosphaten der allgemeinen Formel (I) $M_2PO_3F$ anzugeben. Eine weitere Aufgabe der vorliegenden Erfindung ist es, ein technisch einfaches Verfahren zur Herstellung von reinem Kaliummonofluorphosphat, Rubidiummonfluorphosphat und Cäsiummonofluorphosphat zur Verfügung zu stellen. Diese Aufgaben werden durch das erfindungsgemäße Verfahren gelöst. Das erfindungsgemäße Verfahren zur Herstellung von Alkalimonofluorphosphat der allgemeinen Formel $M_2PO_3F$ (I) ist dadurch gekennzeichnet, daß man eine Reaktionsmischung, welche Alkalimetallkationen M, Phosphat, Fluorid und Wasser enthält, wobei das Molverhältnis von M:P:F sich wie (2 ± 0,1):(1 ± 0,05):(1 ± 0,1) verhält und das Molverhältnis von Wasser:P mindestens 1:1 beträgt, auf eine Temperatur von 150 °C bis 400 °C aufheizt, wobei sich unter Verdampfen von Wasser als Reaktionsprodukt das Alkalimonofluorphosphat der allgemeinen Formel (I) bildet und man, gewünschtenfalls nach einer Nachbehandlung, das Reaktionsprodukt isoliert.

Setzt man beispielsweise eine Reaktionsmischung um, in welcher M für Natrium steht, kann man nach dem erfindungsgemäßen Verfahren Natriummonofluorphosphat mit einer Reinheit von etwa 80 Gew.-% erzeugen. Die anderen Alkalimonofluorphosphate fallen in noch höherer Reinheit an.

Gemäß einer bevorzugten Ausführungsform des erfindungsgemäßen Verfahrens werden reine Alkalimonofluorphosphate hergestellt. Diese bevorzugte Ausführungsform des erfindungsgemäßen Verfahrens ist dadurch gekennzeichnet, daß man zur Herstellung von reinem Alkalimonofluorphosphat der allgemeinen Formel $M_2PO_3F$ (I), worin M für Kalium, Cäsium oder Rubidium steht, eine Reaktionsmischung, die Alkalimetallkationen M, Phosphat, Fluorid und Wasser enthält, wobei das Molverhältnis M:P:F sich wie (2 ± 0,05):(1 ± 0,05):(1 ± 0,1) verhält und das Molverhältnis von Wasser:P mindestens 1:1 beträgt, auf eine Temperatur von 150 bis 400 °C aufheizt, wobei sich unter Verdampfen von Wasser als Reaktionsprodukt das Alkalimonofluorphosphat der allgemeinen Formel (I) bildet, und man das Reaktionsprodukt, gewünschtenfalls nach einer Nachbehandlung, isoliert.

Ganz besonders bevorzugt steht in der vorliegenden Erfindung "Alkali" bzw. M für Kalium. Zur Herstellung von Kaliummonofluorphosphat, $K_2PO_3F$, eignet sich das erfindungsgemäße Verfahren ganz besonders.

Wenn im folgenden der Einfachheit halber von "Alkalimonofluorphosphat" die Rede ist, sind damit Verbindungen der Formel (I) gemeint, die korrekterweise als "Dialkalimonofluormonophosphat" bezeichnet werden müßten.

Zweckmäßig wählt man die Mengen an Ausgangsverbindungen derart, daß das Molverhältnis von M:P:F etwa 2:1:(1 - 1,1) beträgt. Auf diese Weise lassen sich ganz besonders reine Alkalimonofluorphosphate der allgemeinen Formel (I) herstellen.

Das Verhältnis von Wasser:P beträgt bevorzugt mindestens 2:1, beispielsweise 2:1 bis 100:1. Bevorzugt beträgt das Verhältnis von Wasser:P mindestens 3:1. Ganz besonders bevorzugt verwendet man als Reaktionsmischung eine wäßrige Lösung.

Ganz hervorragend geeignet sind wäßrige Lösungen als Reaktionsmischung, die pro mol zu erzeugendem Endprodukt $M_2PO_3F$ etwa 11,9 bis 14,7 mol Wasser enthalten.

Geht man aus von Kalilauge, Phosphorsäure und Flußsäure, setzt man z.B. Reaktionsmischungen ein, die neben KOH, $H_3PO_4$ und HF noch 41 bis 47,7 Gew.-% Wasser enthalten. Eine solche Mischung enthält dann unter der Annahme einer quantitativen Umsetzung zu $K_2PO_3F$ noch 11,9 bis 14,7 mol Wasser pro herzustellendem $K_2PO_3F$.

Das Phosphat kann man in verschiedenster Form in die Reaktionsmischung einbringen. Prinzipiell kann man beliebige, zu Phosphat hydrolysierbare Verbindungen des fünfwertigen Phosphors einsetzen. Zweckmäßig setzt man Verbindungen ein, die aus fünfwertigem Phosphor, Sauerstoff und gegebenenfalls Wasserstoff und/oder Alkalimetall- oder Ammoniumkationen aufgebaut sind. Beispielsweise kann man Phosphorpentoxid, Phosphorsäure, dimere, oligomere oder polymere Phosphorsäure sowie entsprechende einbasige, zweibasige oder dreibasige Alkali- oder Ammoniumverbindungen einsetzen. Beispielsweise kann man Alkalidihydrogenphosphat, Dialkalimonohydrogenphosphat oder Trialkaliphosphat einsetzen. Einsetzbar sind weiterhin entsprechende Ammoniumverbindungen ferner Polyphosphate einschließlich Hydrogenpolyphosphaten, die durch die allgemeine Summenformel $X_{(n+2)}P_nO_{3(n+1)}$ charakterisiert sind, in welchen X für M und/oder $NH_4$ und/oder H steht und in der $n \geq 2$ gilt. Vorzugsweise bedeutet hier n gleich 2 oder 3. Für den Fachmann ist selbstverständlich, daß hochmolekulare Polyphosphate, die bei einer Temperatur bis 400 °C nicht zur Reaktion gebracht werden können, z.B. das hochmolekulare Kurrolsche Kaliumsalz, nicht eingesetzt werden, wohl aber das von Klement und Schmid, Z.Anorg.Allg.Chem. **290** (1957), Seiten 113 bis 132 beschriebenen wasserlösliche Kaliumpolyphosphat.

Weiterhin verwendbar sind auch Cyclophosphate einschließlich Hydrogencyclophosphaten und Cyclophosphorsäuren, die durch die allgemeine Summenformel $X_nP_nO_{3n}$ charakterisiert sind, in welchen X die vorstehend genannte Bedeutung besitzt und in welcher $n \geq 3$ bedeutet. Hier bedeutet n bevorzugt 3 oder 4.

Bevorzugt bringt man das Phosphat in Form von Phosphorsäure, Alkalidihydrogenphosphat oder Dialkalihydrogenphosphat, besonders bevorzugt in Form von Phosphorsäure, in die Reaktionsmischung ein.

Auch das Alkalimetallkation kann man in verschiedenster Form in die Reaktionsmischung einbringen. Zweckmäßig verwendet man Alkaliverbindungen, deren Anion unter den Bedingungen des erfindungsgemäßen Verfahrens flüchtig ist wie Nitrat, Oxalat oder Acetat, bzw. im Verlauf des erfindungsgemäßen Verfahrens zu Wasser umgewandelt wird. Besonders geeignet sind Alkalihydroxid, Alkalilauge, Alkalicarbonat und Alkalihydrogencarbonat. Bevorzugt verwendet man Alkalihydroxid oder Alkalilauge, wenn M Natrium oder Kalium bedeutet, und Alkalicarbonat, wenn M Cäsium oder Rubidium bedeutet.

Auch das Fluorid kann man in verschiedenster Form in die Reaktionsmischung einbringen. Zweckmäßig verwendet man ein Alkalifluorid oder ein Alkalibifluorid oder aber ein Fluorid, dessen Kation unter den Bedingungen des erfindungsgemäßen Verfahrens flüchtig ist, beispielsweise Ammoniumfluorid oder Ammoniumbifluorid. Sofern man ein Alkalifluorid oder ein Alkalibifluorid verwendet, setzt man die vorstehend beschriebenen anderen Alkaliverbindungen in solchen Mengen ein, daß das erfindungsgemäße Verhältnis von M:P:F gewahrt bleibt (sinngemäßes gilt natürlich, sofern man Alkaliphosphate verwendet).

Bevorzugt bringt man das Fluorid in Form von Fluorwasserstoff, insbesondere in Form einer wäßrigen Lösung, in die Reaktionsmischung ein.

Das in der Reaktionsmischung enthaltene Wasser kann ebenfalls verschiedener Herkunft sein. Beispielsweise kann man es als Wasser zusetzen, es kann als Kristallwasser, Konstitutionswasser, als Lösungsmittelwasser, beispielsweise in Form einer wäßrigen Phosphorsäure, als Alkalilauge und/oder wäßriger Fluorwasserstoffsäure, mit den Ausgangsstoffen eingebracht werden.

Als besonders vorteilhaft hat es sich erwiesen, die Reaktionsmischung durch Vermischen von Phosphorsäure, insbesondere wäßriger Phosphorsäure, Alkalilauge und wäßrigem Fluorwasserstoff zu erzeugen. Ganz besonders vorteilhaft ist es, die Reaktionsmischung durch Vermischen von Phosphorsäure, insbesondere wäßriger Phosphorsäure, Alkalilauge und wäßrigem Fluorwasserstoff zu erzeugen und die hierbei erhaltene Reaktionsmischung bis zu dem Zeitpunkt, zu welchem man sie wie angegeben auf die Temperatur von 150 bis 400 °C bringt, bei einer solchen Temperatur zu halten, daß keine Feststoffe ausfallen. Bei Mischungen von Phosphorsäure, Kalilauge und Flußsäure beispielsweise hat sich eine Mindesttemperatur von 60 °C als vorteilhaft erwiesen. Zweckmäßig nutzt man die exotherme Wärmeentwicklung beim Vermischen der Ausgangsverbindungen aus und setzt die Mischung gleich weiter um.

Bevorzugt heizt man die Reaktionsmischung auf eine Temperatur von mindestens 200 °C auf. Ganz besonders vorteilhaft heizt man auf Temperaturen von 220 °C bis 350 °C.

Beim Aufheizen verdampft Wasser, die Ausgangsverbindungen treten miteinander in Reaktion, und es bildet sich das gewünschte Alkalimonofluorphosphat.

Man kann nun das Erzeugnis der Reaktionsmischung und das Aufheizen in demselben Behältnis durchführen. Zweckmäßig verwendet man Behältnisse, die gegenüber Fluorwasserstoff resistent sind, beispielsweise in Edelstahltiegeln, Platintiegeln, Aluminiumgefäßen oder ähnlichem. Es ist jedoch schwierig, die sich im Verlauf der Umsetzung verfestigende Reaktionsmischung aus derartigen Behältnissen zu entfernen. Zweckmäßig wird deshalb die noch flüssige Reaktionsmischung in flächiger Form erhitzt.

Dieses bevorzugte Verfahren zur Herstellung von Alkalimonofluorphosphat der allgemeinen Formel $M_2PO_3F$ (I), worin M für das Kation eines Metalls der ersten Hauptgruppe des Periodensystems steht, ist dadurch gekennzeichnet, daß man eine Reaktionsmischung, welche Alkalimetallkationen M, Phosphat, Fluorid und Wasser enthält, wobei das Molverhältnis von M:P:F sich wie $(2 \pm 0,1):(1 \pm 0,05):(1 \pm 0,1)$ verhält und das Molverhältnis von Wasser:P mindestens 1:1 beträgt, in flächiger Form auf eine Temperatur von 150 °C bis 400 °C aufheizt, wobei sich unter Verdampfen von Wasser als Reaktionsprodukt das Alkalimonofluorphosphat der allgemeinen Formel (I) bildet und man das Reaktionsprodukt isoliert.

Beispielsweise kann man in einem fluorwasserstoffresistenten Behälter beliebiger Form die Reaktionsmischung erzeugen und diese dann auf beheizbare flächige Formen, z.B. Bleche, austragen und dort erhitzen. Die Abtrennung des verfestigten Reaktionsproduktes ist dann beispielsweise mit selbsttragenden Schneiden, z.B. Schabern oder Messern, möglich. Die Verwendung eines Mischbehälters ist vorteilhaft. Man kann aber die Reaktionsmischung auch unmittelbar auf der Heizform erzeugen.

Technisch besonders vorteilhaft ist es, die Reaktionsmischung auf Flächen aufzubringen, die kontinuierlich erneuert werden, beispielsweise auf ein umlaufendes Förderband, z.B. ein Gliederband, von welchem das beim Erhitzen entstehende verfestigte Reaktionsprodukt z.B. mit Schabern gelöst wird.

Besonders bevorzugt bringt man die Reaktionsmischung auf die Oberfläche einer Walze als sich ständig erneuernde Fläche. Auch hier kann die Reaktionsmischung unmittelbar auf der Walzenoberfläche erzeugt werden. Zweckmäßig erzeugt man die Reaktionsmischung zunächst in einem Behälter und bringt die fertige Mischung auf die Walzenoberfläche auf.

Diese ganz besonders bevorzugte Ausführungsform sieht vor, daß man die Phosphat, Fluorid und das Alkalimetallkation enthaltende Reaktionsmischung auf die Oberfläche einer Walze aufbringt, dort auf eine Temperatur von mindestens 150 °C vorzugsweise 200 bis 400 °C, besonders bevorzugt auf eine Temperatur von 220 bis 350 °C erhitzt und das verfestigte Reaktionsprodukt mit einer selbsttragenden Schneide von der Walze ablöst. Dabei sollte die Reaktionsmischung so lange auf der Walzenoberfläche verbleiben, bis die Reaktionsmischung sich unter Bilden des Alkalimonofluorphosphats verfestigt hat und ein Großteil des Wassers, z.B. mehr als 70 %, beispielsweise 70 bis 90 oder gar 100 Gew.-% des vorhandenen Wassers, verdampft sind.

Gewünschtenfalls kann man das Produkt noch einer trocknenden Nachbehandlung bei erhöhter Temperatur unterziehen, zweckmäßigerweise durch Aufheizen auf Temperaturen von mindestens 280 °C bis 400 °C, vorzugsweise 300 bis 350 °C. Dies kann beispielsweise in entsprechenden Öfen oder durch Anwendung geeigneter Strahlung, beispielsweise Infrarotstrahlung, geschehen. Überraschenderweise wird bei dieser Nachbehandlung nicht nur der Gehalt an Wasser gesenkt, sondern auch eine deutliche Produktverbesserung erzielt.

Das erfindungsgemäße Verfahren gestattet die Herstellung von Alkalimonofluorphosphaten, insbesondere von Kalimonofluorphosphat, in überraschender Reinheit. Die Rolle des Wassers beim erfindungsgemäßen Verfahren ist bisher nicht geklärt worden, wohl aber wurde in einer Vielzahl von Versuchen gefunden, daß nur bei Anwesenheit der genannten Mindestmenge an Wasser reines Monofluorphosphat erhalten wird. Es muß als überraschend bezeichnet werden, daß reine Verbindungen überhaupt erhalten werden können, da zu erwarten ist, daß Wasser zur Hydrolyse des erwünschten Fluorphosphats führt.

Im folgenden wird eine Vorrichtung beschrieben, mit welcher sich in besonders einfacher Weise ein sehr reines Monofluorphosphat herstellen läßt.

Die folgenden Beispiele sollen das erfindungsgemäße Verfahren weiter erläutern, ohne es in seinem Umfange einzuschränken.

Beispiele

Allgemeines

Für die Versuche wurden Chemikalien mit dem Reinheitsgrad pro analysi verwendet, beispielsweise entsprechend reine Phosphorsäure, Kalilauge, Flußsäure, Dikaliumhydrogenphosphat. Die Reihenfolge, in welcher die Ausgangsverbindungen zur Herstellung der Ausgangsmischungen miteinander vermischt werden, ist nicht kritisch.

Apparatur

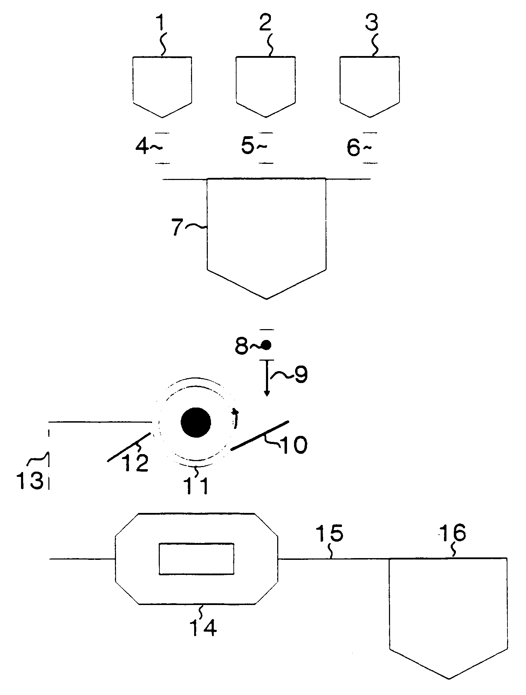

Die Beispiele 1 bis 5 wurden in einer Platinwanne durchgeführt. Das Beispiel 6 wurde in einer Apparatur durchgeführt, wie sie in Figur 1 abgebildet ist. Diese Apparatur wird unter Bezugnahme auf die Figur 1 im folgenden weiter erläutert. Ein Vorratsbehälter 1 dient zur Aufnahme einer Alkalilauge, ein Vorratsbehälter 2 zur Aufnahme einer Phosphorsäurelösung und ein Vorratsbehälter 3 zur Aufnahme einer Flußsäure.

Die Vorratsbehälter 1, 2 und 3 sind durch Ventile 4, 5 und 6 mit einem Mischbehälter 7 verbunden. Der Mischbehälter 7 wiederum ist durch ein Ventil 8 mit der Leitung 9 verbunden. Die Leitung 9 weist an ihrem Ende eine Öffnung auf, die die Zuführung von Reaktionsmischung aus dem Mischbehälter 7 auf eine Aluminiumplatte 10 ermöglicht. Diese Aluminiumplatte 10 ist zu einer Walze 11 hin geneigt so angeordnet, daß Reaktionsmischung, die auf die Platte 10 aufgetragen wird, zur Oberfläche der Walze 11 fließt. Die Walze 11 ist um eine horizontale Achse in der durch einen Pfeil angedeuteten Richtung drehbar. Die Reaktionswalze bestand aus einem innen mit Thermoöl beheizbaren, 2 cm dicken und 48 cm langen Zylinder mit einem Innendurchmesser von 38 cm. Die Umlaufgeschwindigkeit der Walze wird zweckmäßig so eingeregelt, daß sie für eine Umdrehung etwa 20 sec. bis 2 min. benötigt. Über die Aluminiumplatte kann Reaktionsmischung über die gesamte Breite auf die Walzenoberfläche aufgebracht werden. Mittels einer selbsttragenden Edelstahlschneide 12, die durch nicht eingezeichnete hydraulisch betriebene Pressen gegen die Walze gedrückt werden kann, wird das heiße, verfestigte Reaktionsprodukt von der Walzenoberfläche abgelöst. Die Aluminiumplatte 7 und die Edelstahlschneide 12 sind beweglich angeordnet. Der Winkel zwischen der Aluminiumplatte 10 und der Edelstahlschneide 12 (Schnittpunkt ist die Walzenachse) beträgt zweckmäßig zwischen etwa 90 und 270 °C, in Laufrichtung der Walze betrachtet. Über die Schneide 12, die zweckmäßig von der Walze weg fallend angeordnet ist, wird das Reaktionsprodukt auf ein Förderband 13 aufgegeben. Das Förderband 13 ist mit einem Heizofen 14 verbunden. Der Ofen 14 ist mit dem Förderband 15 und einem Vorratsbehälter 16 verbunden.

Analysenmethoden

Methode a) $^{19}$F-NMR-Spektroskopie.

Diese Untersuchungsmethode ermöglicht über die chemische Verschiebung und gegebenenfalls das Aufspaltungsmuster (Kopplung mit dem Phosphoratom) die quantitative Bestimmung einer etwaigen Verunreinigung des gewünschten Monofluorphosphats mit Fluorid und Difluorphosphat.

Methode b) $^{31}$P-NMR-Spektroskopie.

Diese Untersuchungsmethode ermöglicht über die chemische Verschiebung und gegebenenfalls das Aufspaltungsmuster (Kopplung mit dem oder den Fluoratomen) die quantitative Bestimmung einer etwaigen Verunreinigung des hergestellten Monofluorphosphats mit Phosphat oder Difluorphosphat.

Methode c) Quantitative papierchromatographische Analyse nach Rössel.

Diese Methode ermöglicht die quantitative Bestimmung etwaiger anderer Phosphate neben dem gewünschten Monofluorphosphat.

Eine Beschreibung dieser Methode findet sich bei T. Rössel, Z.Anal.Chem. 196 (1973), Seiten 6 bis 15. Man verwendet ein auf eine Länge von 450 mm und eine Breite von 30 mm zugeschnittenes Chromtographiepapier. An jenem Ende, an welchem die zu bestimmende Probe aufgebracht wird, schneidet man das Papier symmetrisch auf einer Länge von 60 mm auf eine Breite von nur 12 mm. Die Probe wird dann in Form eines Tropfens (etwa 0,01 ml) in 50 mm Abstand vom verjüngten Ende des Papierstreifens mittig aufgebracht. Das Chromatographiepapier wird dann in einem geeigneten Gefäß chromatographiert. Nach Rössel verwendet man zweckmäßig ein zylindrisches Glasgefäß von 250 mm Durchmesser, 500 mm Höhe mit eingeschliffenem Deckel. In diesem Glasgefäß wird der Chromatographiestreifen in entsprechenden Haltevorrichtungen so aufgehängt, daß er in das Fließmittel ragt, welches sich etwa 10 mm hoch am Boden des Gefäßes befindet.

Benötigte Lösungen:

1. Methanol-Fließmittel

Lösung I:     133,3 g Trichloressigsäure und 30,0 ml 25%iger Ammoniak werden auf 1000 ml mit destilliertem Wasser aufgefüllt.
Lösung II:    200 ml 96 %iger Eisessig werden mit 800 ml destilliertem Wasser aufgefüllt.

Zur Herstellung des Methanol-Fließmittels werden 120 ml Methanol, 30 ml der Lösung I und 10 ml der Lösung II miteinander vermischt.

2. Sprühlösungen

Molybdat-Sprühlösung:                    40 g Natriummolybdat-Dihydrat und 50 g Ammoniumnitrat werden in destilliertem Wasser aufgelöst und auf 1000 ml aufgefüllt. Diese Lösung wird dann in 100 ml konzentrierte Salpetersäure eingegossen.

Reduktionssprühlösung: 300 g Natriumpyrosulfit und 10 g Natriumsulfit und 2 g Methol (N-Methylaminophenol, Firma Agfa) werden in 1000 ml destilliertem Wasser gelöst und gegebenenfalls filtriert.

Natriummolybdatlösung zur Colorimetrie: 125 g Natriummolybdat-Dihydrat werden in 1000 ml destilliertem Wasser gelöst.

Hydrazinsulfatlösung zur Colorimetrie: 0,3 g Hydrazinsulfat werden in 100 ml destilliertem Wasser gelöst. Diese Lösung wird jedesmal frisch angesetzt.

Perchlorsäure (70 %ig).

Durchführung der Analyse:

1 Tropfen etwa (0,01 ml) werden wie oben beschrieben auf dem Chromatographiepapier aufgebracht. Der Chromatographiestreifen wird dann im Gefäß so angebracht, daß er bis in das Methanol-Fließmittel reicht, welches etwa 10 mm hoch am Gefäßboden sich befindet. Man chromatographiert zweckmäßig bei konstanter Temperatur (Umgebungstemperatur), bis die Fließmittelfront bis etwa 5 cm unterhalb des oberen Randes des Chromatographiepapiers gestiegen ist.

Dies dauert ca. 16 Stunden. Danach wird das Chromatogramm aus dem Gefäß herausgenommen, im Trockenschrank bei etwa 60 bis 80 °C gut getrocknet, danach mit einer Sprühflasche mit der Molybdatsprühlösung bis zur gerade eben gleichmäßigen Feuchtigkeit besprüht und wiederum etwa 5 bis 10 Minuten gut durchgetrocknet. Dann wird mit der Reduktionssprühlösung in gleicher Weise besprüht und wieder getrocknet. Die Phosphate erscheinen nun als blaue Flecken auf dem Papier. Die Phosphatflecken werden dann so ausgeschnitten, daß alles Phosphat erfaßt, jedoch kein überflüssiges Papier mitgeschnitten wird. Ein etwa flickengroßes Stück ohne Phosphat wird zur Leerwertbestimmung mit herausgeschnitten und der gleichen Behandlung wie alle anderen unterworfen (Zweckmäßig läßt man ein weiteres Chromatographiepapier parallel als Blindprobe während des Chromatographierens mitlaufen). Die herausgeschnittenen Flecken werden dann in 50 ml-Meßkolben gegeben, mit 4 ml der konzenterierten Perchlorsäure versetzt und zur Zerstörung des Papiers ohne Aufsetzen des Schliffstopfens auf dem Sandbad bei mäßiger Temperatur erhitzt, bis nach heftigem Aufsieden der dunkelbraun gewordenen Säure Klärung eingetreten und die Säure weiß bis schwachgelb geworden ist. Nach Verdünnen der Säurelösung auf ca. 25 ml werden die Meßkolben zur Hydrolyse 1 Stunde bei 90 °C in einen Trockenschrank gestellt.

Die Auswertung der getrennten Phosphate erfolgt colorimetrisch. Hierzu kann man handelsübliche Photometer verwenden. In die abgekühlten Meßkolben werden jeweils 1 ml der Natriummolybdatlösung zur Colorimetrie und 1 ml der Hydrazinsulfatlösung zur Colorimetrie als Reduktionslösung zugegeben. Die Meßkolben werden dann noch einmal 25 Minuten bei 90 °C in den Trockenschrank gestellt. Der Leerwert erscheint nun weiß bis schwachgelblich. Nach Abkühlen und Auffüllen mit destilliertem Wasser wird die Durchlässigkeit bestimmt. Aus der Extinktion der einzelnen Proben, bezogen auf die Summe der Extinktionen kann man den Phosphat-Anteil der einzelnen Flecken und somit die Phosphat-Verteilung in Prozenten errechnen nach

$$n \ \% \ P_2O_5 \ = \ (100 \ x \ E : \Sigma E).$$

Methode d) Bestimmung des Fluoridgehalts in der Probe mittels einer selektiv auf Fluorid ansprechenden Fluoridelektrode vor und nach Hydrolyse. Der Vergleich beider Zahlenwerte ermöglicht die Bestimmung des Anteils an nicht an Phosphor gebundenem Fluorid im hergestellten Monofluorphosphat.

Verwendet wurde die selektiv auf Fluorid ansprechende Fluoridelektrode 157205 der Firma Dr. W. Ingold AG, Urdorf-Zürich, Schweiz.

Zur Durchführung der Fluoridbestimmung benötigte Lösungen:

Fluorid-Stammlösung: wäßrige Lösung mit 2,2101 g Natriumfluorid pro Liter. Eine solche Lösung enthält pro ml genau 1 mg Fluorid.

Tironpufferlösung: 33,2 g Tiron (Fa. Merck, Darmstadt) (Tiron = Brenzcatechindisulfonsäure - 3,5 - Dinatriumsalzmonohydrat)
102,06 g Natriumacetat
58,44 g Natriumchlorid
15,01 g Essigsäure (15,8 ml)
auf 1 Liter mit dest. Wasser aufgefüllt.

Zunächst wurde eine Eichkurve aufgestellt. Hierzu wurden von der Fluorid-Stammlösung 0,1 ml in einen 100 ml-Meßkolben pipettiert. Dann wurde etwas destilliertes Wasser zugegeben und einige Körnchen Hydroxylammoniumchlorid zugegeben. Dann wurde Phenolphthalein zugesetzt und Kalilauge zugegeben, bis die Lösung schwach rosa gefärbt war. Der pH-Wert betrug etwa 8. Danach wurde in den Meßkolben 10 ml der oben beschriebenen Tironpufferlösung zugefügt und der Meßkolben anschließend mit destilliertem Wasser bis zur Marke aufgefüllt. Der Kolbeninhalt wurde dann in ein trockenes 150 ml-Becherglas gegeben (ohne Spülen). Dann wurde die Fluoridelektrode in die Lösung eingetaucht und in der Lösung hin und her bewegt. Nach Gleichgewichtseinstellung, d.h. nach etwa 5 Minuten, wurde die in Millivolt angegebene Anzeige eines pH-Meters, an welches die Fluoridelektrode angeschlossen war, abgelesen und notiert.

In gleicher Weise wurden der Fluorid-Stammlösung eine 1 ml-Probe und eine 10 ml-Probe entnommen und wie vorstehend beschrieben untersucht. Durch Auftragen der Meßwerte in Millivolt gegen den Gehalt an Fluorid in den jeweils verwendeten Lösungen in Milligramm auf logarithmischem Millimeterpapier wurde eine Eichkurve erstellt.

Bestimmung des Fluorid-Gehalts in Probelösungen vor Hydrolyse:

Das zu untersuchende Verfahrensprodukt wurde in destilliertem Wasser aufgelöst. Der erhaltenen Probelösung wurde ein genau bestimmtes Volumen, gewöhnlich 1 bis 50 ml, entnommen. Der Fluorid-Gehalt der Probe sollte zwischen 0,1 und 10 mg Fluorid betragen. Die entnommene Probe wurde wie oben behandelt, d.h. in einen 100 ml-Meßkolen pipettiert, mit etwas destilliertem Wasser verdünnt. Danach wurden einige Körnchen Hydroxylammoniumchlorid zugegeben und der pH-Wert mittels Kalilauge auf etwa 8 eingestellt. Anschließend wurden 10 ml der Tironpufferlösung hinzugefügt und der Meßkolben mit destilliertem Wasser bis zur Marke aufgefüllt. Der Inhalt des Kolbens wurde dann ohne Spülen in ein trockenes 150 ml-Becherglas gegeben. Dann wurde die Fluoridelektrode eingetaucht und hin und her bewegt. Nach 5 Minuten wurde der gemessene Wert in Millivolt abgelesen und anhand der Eichkurve ausgewertet.

Bestimmung des Fluorid-Gehalts nach Hydrolyse:

Verwendet wurde ein Tauchsieder-Destillationsapparat nach Döhr, wie er in der Werbeschrift "Glastechnische Informationen für Labor, Technikum und Betrieb Nr. 4" der Firma Glasapparatebau Herbert Miethke, Leverkusen, beschrieben wird. Dieser Apparat umfaßt zwei ineinander angeordnete Gefäße. Das äußere Gefäß ist ein durch einen Tauchsieder beheizter Dampfentwickler, und das innere Gefäß ist das Reaktionsgefäß. Beide Gefäße sind durch eine Deckel fest miteinander verbunden. Auf das Reaktionsgefäß ist ein Destillationsaufsatz aufgesetzt. An den Destillationsaufsatz wiederum ist ein Henkelkühler angesetzt.

Zur Bestimmung des Fluoridwerts nach Hydrolyse wurde eine genau ausgewogene Menge der Probe (zwischen etwa 0,3 und etwa 0,4 g) in ein 150 ml-Becherglas eingewogen. Die Probe wurde in wenig zugesetztem destilliertem Wasser aufgelöst, 2 ml Silbersulfatlösung (= 0,256 g Silbersulfat) sowie 70 ml Perchlorsäure mit 70 Gew.-% $HClO_4$ zugegeben und das Gemisch in das innere Gefäß der Apparatur gespült. Anschließend wurde noch ein Spatel voll Seesand (etwa 3 bis 4 g) hinzugefügt. Das äußere Gefäß wurde dann zu 3/4 des Volumens mit destilliertem Wasser gefüllt. Ein Meßkolben mit einem Liter Inhalt, in den etwas destilliertes Wasser gegeben wurde, wurde so unter den Henkelkühler gestellt, daß das Kühlerende in das Wasser eintauchte. Danach wurde mittels des Tauchsieders das im äußeren Gefäß befindliche Wasser langsam verdampft und der Dampf durch die Probenlösung im inneren Gefäß durchgeleitet. Die Heizung wurde so eingestellt, daß die Siedetemperatur 108 °C nicht überschritt. Mit dem Wasserdampf wurde sowohl das von vornherein als Fluorid vorliegende Fluor als auch das allmählich hydrolysierende, zunächst an Phosphor gebundene Fluor übergetrieben. Nach etwa 1 Stunde war der gesamte Fluorgehalt der Probe überdestilliert und der 1 l-Kolen fast voll. Der 1 l-Meßkolben wurde dann vom Kühler entfernt, das Kühlerende abgespült und der Kolben mit destilliertem Wasser bis zur Marke aufgefüllt. 25 ml wurden aus dem Kolbeninhalt entnommen und in einen 100 ml-Meßkolben pipettiert. Zur Fluorid-Bestimmung wurde dann, wie vorstehend beschrieben, vorgegangen, d.h. destilliertes Wasser und Hydroxylammoniumchlorid zugegeben, der pH-Wert eingestellt sowie Tironpufferlösung zugegeben.

Unter Zuhilfenahme der Eichkurve kann aus dem ermittelten Millivolt-Meßwert des pH-Meters der Gesamtgehalt an Fluor in der Probe bestimmt werden.

Aus dem Vergleich der Meßwerte der Probe vor Hydrolyse und nach Hydrolyse kann wiederum berechnet werden, welchen Gehalt die jeweilige Probe an Fluorid bzw. an Fluor, gebunden an Phosphor, enthält.

Durch Vergleich des Fluoridgehalts vor und nach Hydrolyse kann also festgestellt werden, wieviel Alkalifluorid das hergestellte Alkalimonofluorphosphat enthält.

Methode e) Elementaranalyse.

Diese Methode ermöglicht die Bestimmung des Atomverhältnisses von M:P:F.

### Beispiel 1

In eine Platinwanne wurden 112,0 g Phosphorsäure (P-Gehalt etwa 27,69 %, das entspricht einer 87,46 %igen Säure und 1 mol $H_3PO_4$) vorgelegt. Danach wurden zunächst 407,3 g Kalilauge (27,55 Gew.-% KOH, entsprechend 2 mol KOH) und danach 114,5 g Flußsäure (19,22 Gew.-% HF, entsprechend 1,10 mol HF) hinzugefügt. Das Ausgangsatomverhältnis dieses Ansatzes betrug also K:P:F = 2:1:1,10. Die Mischung wurde dann auf 350 °C erhitzt.Nach etwa 1 Stunde war die Reaktionsmischung vollständig kristallisiert. Sie wurde anschließend noch 1 Stunde bei etwa 350 °C belassen.
Ausbeute: 176,7 g.

### Beispiel 2

Es wurde wie in Beispiel 1 verfahren, jedoch betrug die eingesetzte Menge an Flußsäure etwa 109,3 g (entsprechend 1,05 mol HF). Das Ausgangsatomverhältnis in der Reaktionsmischung verhielt sich also wie K:P:F = 2:1:1,05.
Ausbeute: 177,1 g.

### Beispiel 3

Es wurde wie in Beispiel 1 verfahren, jedoch betrug die eingesetzte Menge an Flußsäure diesmal 104,1 g (entsprechend 1,00 mol HF) und das Ausgangsatomverhältnis verhielt sich somit wie K:P:F = 2:1:1,00.
Ausbeute: 176,3 g.

### Beispiel 4

Es wurde wie in Beispiel 1 verfahren, die eingesetzte Menge an Flußsäure betrug jedoch 93,7 g (entsprechend 0,90 mol HF). Das Ausgangsatomverhältnis verhielt sich somit wie K:P:F = 2:1:0,90.
Ausbeute: 175,9 g.

Charakterisierung der gemäß Beispiele 1 bis 4 erhaltenen Produkte

Alle 4 Produkte sind vollständig in Wasser löslich. Der zur Reaktion eingesetzte Phosphor und das eingesetzte Kalium ist in den Produkten vollständig enthalten. Die Aufteilung des Gesamtphosphors in den Reaktionsprodukten, ermittelt nach Methode c), ergab die folgenden Werte:

Tabelle 1

| Ergebnis der quant.papierchrom.Analyse der Reaktionsprodukte der Beispiele 1 bis 4 | | | |
|---|---|---|---|
| Produkt n. Bsp. | Ausgangsatomverhältnis P:F | Phosphorverteilung (Atom-%) | |
| | | als $PO_3F^{2-}$ | als $PO_4^{3-}$ |
| 1 | 1 : 1,10 | 100 | 0 |
| 2 | 1 : 1,05 | 99 | 1 |
| 3 | 1 : 1,00 | 98,5 | 1,5 |
| 4 | 1 : 0,90 | 89 | 11 |

Die durch Methode b) ermittelte Phosphorverteilung geht konform mit den in Tabelle 1 wiedergegebenen Ergebnissen der Untersuchungsmethode c). Die Untersuchung nach Methode a) der 4 Reaktionsprodukte bewies, daß kein Fluorid $F^-$ in den Produkten enthalten war. Aus den Guinieraufnahmen der nach den Beispielen 1 bis 4 hergestellten Produkte geht hervor, daß jeweils kristallines Dikaliummonofluormono-phosphat $K_2PO_3F$ entstanden ist. Die Reinheit des Produktes ist bei Anwendung eines geringfügig überstöchiometrischen Einsatzes von Fluor besonders hoch.
Die Analyse nach Methode e) für das nach Beispiel 3 erhaltene Produkt: $K_2PO_3F$ (Molmasse: 176,175)

Tabelle 2

| Elementaranalyse für das Produkt von Beispiel 3 | | | |
|---|---|---|---|
| | K | P | F |
| gefunden | 44,80 | 17,56 | 10,70 |
| berechnet | 44,39 | 17,58 | 10,78 |

Aus Tabelle 2 ergibt sich ein Atomverhältnis von K:P:F = 2,02:1,0:0,99. Die Ergebnisse der anderen Analysemethoden werden durch diese Elementaranalyse bestätigt.

Beispiel 5

Zunächst wurde eine Lösung von 174,2 g (1 mol) Dikaliumhydrogenphosphat in 180 g destilliertem Wasser hergestellt. In diese Lösung wurden zunächst 112,0 g Phosphorsäure (P-Gehalt etwa 27,65 Gew.-%, entsprechend 1 mol $H_3PO_4$),danach 227,2 g Kalilauge (Gehalt an KOH etwa 49,4 Gew.-%, entsprechend 2 mol KOH) und schließlich 112,9 g Flußsäure (HF-Gehalt etwa 39,0 Gew.-%, entsprechend 2,2 mol HF) eingetragen. Das Gemisch wurde dann auf 320 °C bis zur vollständigen Kristallisation erhitzt und danach noch 1 Stunde bei dieser Temperatur gehalten.
Ausbeute: 351,4 g.
Das Produkt bestand aus reinem kristallinem $K_2PO_3F$, wie die Analysenmethoden a), b), c) sowie Guinieraufnahmen bewiesen.

Beispiel 6

Das Beispiel 6 wurde in einer Apparatur nach Figur 1 durchgeführt.
In das Vorratsbehältnis 1 wurde eine 45 Gew.-% KOH enthaltende Kalilauge, in den Vorratsbehälter 2 eine 85,7 Gew.-% $H_3PO_4$ enthaltende Phosphorsäure und in den Vorratsbehälter 3 eine 40 Gew.-% HF enthaltende wäßrige Flußsäure eingebracht. Das Ventil 4 wurde geöffnet und 249,5 g der Kalilauge in das Mischgefäß 7 einlaufen gelassen. Nach Schließen des Ventils 4 wurde Ventil 5 geöffnet und 114,5 g der ortho-Phosphorsäurelösung zugegeben. Nach Schließen des Ventils 5 wurde Ventil 6 geöffnet und 53,5 g der Flußsäurelösung in den Mischbehälter eingebracht.
Unter der Annahme einer quantitativen Umsetzung zu Dikaliummonofluormonophosphat entspricht dies einem Molverhältnis von Wasser zu Endprodukt $K_2PO_3F$ von 13,2:1 (entsprechend einer wäßrigen Lösung von $K_2PO_3F$ mit 57,5 Gew.-% Wasser).
Das Atomverhältnis von K:P:F in der Reaktionsmischung verhielt sich wie 2:1:1,07. Die Temperatur in der Reaktionsmischung stieg auf etwa 70 °C. Das frisch zubereitete, 70 °C warme Reaktionsgemisch wurde dann über das Ventil 8 und die Leitung 9 auf die Aluminiumplatte 10 gegeben. Von der Aluminiumplatte 10 floß es gleichmäßig, langsam und dünnschichtig auf die Walzenoberfläche der Walze 11, die mittels Thermoöl auf eine Temperatur von ca. 230 bis 260 °C aufgeheizt wurde. Sobald die Lösung auf die Walzenoberfläche auftrag, verdampfte das in ihr enthaltene Wasser. Es wird angenommen, daß jetzt auch die Ausgangsverbindungen miteinander unter Bildung des gewünschten Monofluorphosphats in Reaktion treten. Der entstehende Dampf, der in geringen Konzentrationen Fluorwasserstoff enthielt, wurde über eine Abzugshaube in einen Gaswäscher abgeführt.
Die Walze wurde über einen stufenlos regelbaren Elektromotor mit Kette angetrieben. Die Reaktionsmischung verblieb für die Dauer einer 2/3-Umdrehung, etwa 30 bis 40 sec., auf der Walzenoberfläche. Das im Verlauf des Trocknungsvorgangs auf der Oberfläche der Walze verbackende, gebildete Kaliummonofluorphosphat wurde dann mittels der Schneide 12 von der Oberfläche der Walze abgeschabt. Über das Förderband 13 wurde das Produkt, das allenfalls noch 0,7 Gew.-% Wasser enthielt, in einen Trockenofen eingebracht und dort während einer Zeitdauer von 20 Minuten bei 320 °C nachgetrocknet. Danach wurde es aus dem Trockenofen über die Leitung 15 in einen Vorratsbehälter 16 überführt.
Die Analyse wurde nach der Methode d) und e) durchgeführt. Das Verhältnis Fluorid vor Hydrolyse zu insgesamt enthaltenen Fluor, also Fluorid nach Hydrolyse ergab, daß das Produkt zu etwa 95 Gew.-% aus Dikaliummonofluormonophosphat bestand.

EP 0 564 451 B1

Tabelle 3

| Elementaranalyse für das Produkt von Beispiel 6 | | | |
|---|---|---|---|
| | K | P | F |
| gefunden | 45,1 | 17,4 | 9,9 |
| berechnet | 44,39 | 17,58 | 10,78 |

Die Elementaranalyse bestätigt das Ergebnis der Analyse nach Methode d).

**Patentansprüche**

1. Verfahren zur Herstellung von Alkalimonofluorphosphat der allgemeinen Formel $M_2PO_3F$ (I), worin M für das Kation eines Metalls der ersten Hauptgruppe des Periodensystems steht, dadurch gekennzeichnet, daß man eine Reaktionsmischung, welche Alkalimetallkationen M, Phosphat, Fluorid und Wasser enthält, wobei das Molverhältnis von M:P:F sich wie $(2 \pm 0,1):(1 \pm 0,05):(1 \pm 0,1)$ verhält und das Molverhältnis von Wasser:P mindestens 1:1 beträgt, auf eine Temperatur von 150 °C bis 400 °C aufheizt, wobei sich unter Verdampfen von Wasser als Reaktionsprodukt das Alkalimonofluorphosphat der allgemeinen Formel (I) bildet und man das Reaktionsprodukt isoliert.

2. Verfahren nach Anspruch 1, dadurch gekennzeichnet, daß man zur Herstellung von reinem Alkalimonofluorphosphat der allgemeinen Formel $M_2PO_3F$ (I), worin M für Kalium, Cäsium oder Rubidium steht, eine Reaktionsmischung, die Alkalimetallkationen M, Phosphat, Fluorid und Wasser enthält, wobei das Molverhältnis M:P:F sich wie $(2 \pm 0,05): (1 \pm 0,05):(1 \pm 0,1)$ verhält und das Molverhältnis von Wasser:P mindestens 1:1 beträgt, auf eine Temperatur von 150 bis 400 °C aufheizt, wobei sich unter Verdampfen von Wasser als Reaktionsprodukt das Alkalimonofluorphosphat der allgemeinen Formel (I) bildet, und man das Reaktionsprodukt isoliert.

3. Verfahren nach Anspruch 2, dadurch gekennzeichnet, daß das Molverhältnis von M:P:F sich wie 2:1:(1 bis 1,1) verhält.

4. Verfahren nach Anspruch 1, dadurch gekennzeichnet, daß das Molverhältnis von Wasser:P 2:1 bis 100:1 beträgt.

5. Verfahren nach Anspruch 4, dadurch gekennzeichnet, daß die Reaktionsmischung eine wäßrige Lösung darstellt.

6. Verfahren nach Anspruch 1, dadurch gekennzeichnet, daß man das Phosphat in Form von Phosphorsäure in die Reaktionsmischung einbringt.

7. Verfahren nach Anspruch 1, dadurch gekennzeichnet, daß man das Fluorid in Form einer wäßrigen Fluorwasserstoffsäure in der Reaktionsmischung einbringt.

8. Verfahren nach einem der vorhergehenden Ansprüche, dadurch gekennzeichnet, daß M Kalium bedeutet.

9. Verfahren nach Anspruch 8, dadurch gekennzeichnet, daß man Kalium in Form von Kalilauge in die Reaktionsmischung einbringt.

10. Verfahren nach Anspruch 1, dadurch gekennzeichnet, daß man die Reaktionsmischung durch Vermischen von Phosphorsäure, Kalilauge und wäßriger Fluorwasserstoffsäure erzeugt.

11. Verfahren nach Anspruch 10, dadurch gekennzeichnet, daß man die Reaktionsmischung durch Vermischen von Phosphorsäure, Kalilauge und wäßriger Fluorwasserstoffsäure erzeugt und die Reaktionsmischung bis zum Beginn des Aufheizens auf die Temperatur von 150 °C bis 400 °C bei einer solchen Temperatur hält, daß keine Feststoffe ausfallen.

**12.** Verfahren nach Anspruch 11, dadurch gekennzeichnet, daß man die Reaktionsmischung auf eine Temperatur von mindestens 200 °C, vorzugsweise 220 °C bis 350 °C aufheizt.

**13.** Verfahren nach Anspruch 1, dadurch gekennzeichnet, daß man die Reaktionsmischung auf flächige beheizbare Formen aufbringt und die in flächige Form aufgebrachte Reaktionsmischung erhitzt.

**14.** Verfahren nach Anspruch 13, dadurch gekennzeichnet, daß man die Reaktionsmischung auf die Oberfläche einer Walze aufbringt, dort auf eine Temperatur von mindestens 150 °C, vorzugsweise 200 °C bis 400 °C, insbesondere 220 °C bis 350 °C erhitzt und das unter Verdampfen von Wasser gebildete Reaktionsprodukt mit einer selbsttragenden Schneide von der Walzenoberfläche ablöst.

**15.** Verfahren nach Anspruch 1, dadurch gekennzeichnet, daß man das Reaktionsprodukt einer Nachbehandlung unterwirft.

**16.** Verfahren nach Anspruch 15, dadurch gekennzeichnet, daß man das Reaktionsprodukt unter Erhitzen auf eine Temperatur von mindestens 280 °C bis 400 °C, vorzugsweise 300 bis 350 °C, einer trocknenden Nachbehandlung unterwirft.

**Claims**

1. A method for the production of alkali monofluorophosphate of the general formula $M_2PO_3F$ (I), in which M stands for the cation of a metal of the first main group of the periodic table, characterised in that a reaction mixture which contains alkali metal cations M, phosphate, fluoride and water, the molar ratio of M:P:F being $(2 \pm 0.1):(1 \pm 0.05):(1 \pm 0.1)$ and the molar ratio of water:P being at least 1:1, is heated to a temperature of 150°C to 400°C, with the alkali monofluorophosphate of the general formula (I) being formed as reaction product, with the evaporation of water, and the reaction product being isolated.

2. A method according to Claim 1, characterised in that in order to produce pure alkali monofluorophosphate of the general formula $M_2PO_3F$ (I), wherein M stands for potassium, caesium or rubidium, a reaction mixture which contains alkali metal cations M, phosphate, fluoride and water, the molar ratio M:P:F being $(2 \pm 0.05):(1 \pm 0.05):(1 \pm 0.1)$ and the molar ratio of water:P being at least 1:1, is heated to a temperature of 150 to 400°C, with the alkali monofluorophosphate of the general formula (I) being formed as reaction product, with the evaporation of water, and the reaction product being isolated.

3. A method according to Claim 2, characterised in that the molar ratio of M:P:F is 2:1:(1 to 1.1).

4. A method according to Claim 1, characterised in that the molar ratio of water:P is 2:1 to 100:1.

5. A method according to Claim 4, characterised in that the reaction mixture is an aqueous solution.

6. A method according to Claim 1, characterised in that the phosphate is introduced into the reaction mixture in the form of phosphoric acid.

7. A method according to Claim 1, characterised in that the fluoride is introduced into the reaction mixture in the form of an aqueous hydrofluoric acid.

8. A method according to one of the preceding Claims, characterized in that M stands for potassium.

9. A method according to Claim 8, characterised in that potassium is introduced into the reaction mixture in the form of potassium hydroxide solution.

10. A method according to Claim 1, characterised in that the reaction mixture is produced by mixing phosphoric acid, potassium hydroxide solution and aqueous hydrofluoric acid.

11. A method according to Claim 10, characterised in that the reaction mixture is produced by mixing phosphoric acid, potassium hydroxide solution and aqueous hydrofluoric acid and the reaction mixture, until heating to the temperature of 150°C to 400°C starts, is kept at such a temperature that no solids are produced.

**12.** A method according to Claim 11, characterised in that the reaction mixture is heated to a temperature of at least 200°C, preferably 220°C to 350°C.

**13.** A method according to Claim 1, characterised in that the reaction mixture is placed on flat heatable moulds and the reaction mixture applied in flat form is heated.

**14.** A method according to Claim 13, characterised in that the reaction mixture is applied to the surface of a roller, is heated thereon to a temperature of at least 150°C, preferably 200°C to 400°C, in particular 220°C to 350°C, and the reaction product produced with evaporation of water is detached from the roller surface by means of a self-supporting cutter.

**15.** A method according to Claim 1, characterised in that the reaction product is subjected to subsequent heating.

**16.** A method according to Claim 15, characterised in that the reaction product is subjected to drying subsequent treatment with heating to a temperature of at least 280°C to 400°C, preferably 300 to 350°C.

**Revendications**

**1.** Procédé de fabrication de monofluorophosphate alcalin de formule générale $M_2PO_3F$ (I) (dans laquelle M représente le cation d'un métal du premier groupe principal du Système ou Tableau Périodique), procédé caractérisé en ce qu'on chauffe un mélange réactionnel, qui contient des ions M de métal alcalin, du phosphate, du fluorure et de l'eau, le rapport molaire M:P:F étant comme $(2 \pm 0,1): (1 \pm 0,05): (1 \pm 0,1)$ et le rapport molaire entre l'eau et P valant au moins 1:1, à une température de 150°C jusqu'à 400°C, ce qui permet la formation, avec évaporation de l'eau, du monofluorophosphate alcalin de formule générale (I) comme produit de réaction, et en ce qu'on isole le produit de réaction.

**2.** Procédé selon la revendication 1, caractérisé en ce que, pour préparer du monofluorophosphate alcalin pur de formule générale $M_2PO_3F$ (I) (dans laquelle M représente le potassium, le césium ou le rubidium), on chauffe un mélange réactionnel, qui contient des cations de métaux alcalins M, du phosphate, du fluorure et de l'eau, le rapport molaire M:P:F étant comme $(2 \pm 0,05): (1 \pm 0,05): (1 \pm 0,1)$ et le rapport entre l'eau et P valant au moins 1:1, à une température de 150 à 400°C, ce qui détermine la formation, avec évaporation de l'eau, du monofluorophosphate alcalin de formule générale (I) comme produit de réaction, et l'on isole le produit de réaction.

**3.** Procédé selon la revendication 2, caractérisé en ce que le rapport molaire M:P:F se situe comme 2:1:(1 à 1,1).

**4.** Procédé selon la revendication 1, caractérisé en ce que le rapport molaire entre l'eau et P vaut 2:1 à 100:1.

**5.** Procédé selon la revendication 4, caractérisé en ce que le mélange réactionnel constitue une solution aqueuse.

**6.** Procédé selon la revendication 1, caractérisé en ce qu'on introduit le phosphate sous forme d'acide phosphorique dans le mélange réactionnel.

**7.** Procédé selon la revendication 1, caractérisé en ce qu'on introduit le fluorure sous forme d'une solution aqueuse d'acide fluorhydrique dans le mélange réactionnel.

**8.** Procédé selon l'une des revendications précédentes, caractérisé en ce que M représente le potassium.

**9.** Procédé selon la revendication 8, caractérisé en ce qu'on introduit le potassium sous forme de lessive de potasse dans le mélange réactionnel.

**10.** Procédé selon la revendication 1, caractérisé en ce qu'on produit le mélange réactionnel par mélangeage d'acide phosphorique, d'une lesive de potasse et d'une solution aqueuse d'acide fluorhydrique.

**11.** Procédé selon la revendication 10, caractérisé en ce qu'on produit le mélange réactionnel par mélangeage d'acide phosphorique, d'une lessive de potasse et d'une solution aqueuse d'acide fluorhydrique, et en ce qu'on maintient le mélange réactionnel, jusqu'au début du chauffage à la température de 150°C à 400°C, à une température telle qu'il n'y a pas précipitation de solides.

**12.** Procédé selon la revendication 11, caractérisé en ce qu'on chauffe le mélange réactionnel à une température d'au moins 200°C, avantageusement de 220°C à 350°C.

**13.** Procédé selon la revendication 1, caractérisé en ce qu'on place le mélange réactionnel sur des moules plats chauffables et en ce qu'on chauffe le mélange réactionnel placé dans un moule plat.

**14.** Procédé selon la revendication 13, caractérisé en ce qu'on applique le mélange réactionnel sur la surface d'un cylindre, on l'y chauffe à une température d'au moins 150°C, avantageusement de 200°C à 400°C, notamment de 220°C à 350°C, et on détache de la surface du cylindre, avec un couteau se soutenant de soi-même, le produit de réaction formé avec évaporation de l'eau.

**15.** Procédé selon la revendication 1, caractérisé en ce qu'on soumet le produit de réaction à un posttraitement.

**16.** Procédé selon la revendication 15, caractérisé en ce qu'on soumet le produit de réaction à un post-traitement de séchage, par chauffage à une température d'au moins 280°C à 400°C, avantageusement de 300 à 350°C.